# EUROPEAN PATENT APPLICATION

(11) **EP 3 510 900 A1**
(43) Date of publication of application: **17.07.2019**
(21) Application number: 19151594.9
(22) Date of filing: 14.01.2019
(51) Int. Cl.: A47J 31/00

(54) **COFFEE MACHINE**

(30) Priority: 16.01.2018 ES 201830049 U
(71) Applicant: Vendiser, S.L., 08210 Barbea del Valles (Barcelona) (ES)
(72) Inventor: CAZORLA TRUJILLO, José, 08210 BARBEA DEL VALLES (Barcelona) (ES)
(74) Representative: Ungria López, Javier

(57) **Abstract**

The invention relates to a coffee machine, comprising electronic elements controlled by a control circuit (8) for dispensing a product, previously selected by a user, a heated water tank being one of the electronic elements. The invention is characterised in that it further comprises at least one power source (1) for charging an accumulator (2) for powering the electronic elements and the control circuit (8); wherein the control circuit is configured to control the recharging of the accumulator (2) through the power source (1) as well as filling the heated tank (4) with water. This configuration has the advantage of enabling the autonomous operation and portability of the machine, without needing to be connected to an electrical grid and a water network, the battery being charged and the heated water tank having been filled previously.

## Description

### Object of the invention

The present invention relates to a coffee machine which has the object of enabling the portability thereof so that it can work without being connected to an electrical grid and a water network, thus being able to provide the services thereof in any place that is desired.

The invention has applications in any case where it is necessary to have a coffee machine, more specifically in those cases where it is necessary to have a coffee machine temporarily, such as in catering, hospitals, residences, etc.

Furthermore, the invention, when applied in hospitals and residences, solves a hygienic issue, since it prevents the coffee from being handled by the health care staff and provides coffee that is recently made and not handled.

### Background of the invention

In the state of the art, the use of dispensing coffee makers that need to be connected to the electrical grid and the water network in order to work is known, since they comprise electronic components controlled by a control circuit, one of the electronic elements being a heated water tank, by means of which hot water is supplied for making the coffee. Consequently, these machines need electrical power to be able to work, as well as a water supply, for which reason they are installed in a location wherein an electrical outlet and a water outlet are arranged, such that once the installation has been performed, the machine remains fixed in that place and it cannot be moved.

Consequently, a user of the machine must go to the place where it is installed in order to obtain the products that it is able to dispense, which in many cases represents a problem, for example, in hospitals and residences, since there are many sick persons who cannot access the machine. For this reason, the health care staff is responsible for providing coffee to the sick persons, which requires handling by the health care staff, providing the service in cups directly to the client and coming from a thermos or other vessels. Furthermore, the milk also passes through different vessels, for an unknown amount of time, with the amount of germs that can exist in hospitals.

The invention solves the problem of the coffee machine having to be fixed in the location where it was installed, for which reason it is portable for the use thereof in different places, without needing to be connected to the electrical grid and water network. Furthermore, it solves a hygienic problem, since it provides an autonomous coffee machine that can be moved around the hospital which prevents the previously mentioned handling, and it provides recently made coffee.

### Description of the invention

In order to reach the objectives and solve the aforementioned drawbacks, the invention, like conventional machines, comprises electronic elements that are controlled by a control circuit to enable a product, previously selected by a user, to be dispensed. One of the electronic elements included in the machine is a heated water tank that provides hot water for obtaining the product selected by the user.

The main novelty of the invention is characterised in that it comprises at least one power source to power the electronic elements and the control circuit. Furthermore, the control circuit is configured to control the recharging of the accumulator through the power source, as well as filling the heated tank with water, such that by means of this configuration the machine is able to work autonomously and is portable, disconnected from an electrical grid and from a water network, the battery being charged and the heated water tank having been filled previously.

In the preferred embodiment of the machine, it comprises an indicator of the charge of the accumulator to indicate when it is fully charged.

Furthermore, it comprises a solenoid valve and a manometer, which are connected to the heated water tank, by means of which the control circuit controls the filling of said heated tank with water, for which reason said solenoid valve and manometer are also connected to the control circuit.

In order to guide the user in selecting and indicating the operating condition in which the machine is found, it comprises a display screen, which indicates to the user the different steps to follow in the dispensation, and indicates the different operating states through which the machine passes.

Furthermore, it comprises a first container of soluble coffee and a second container of powdered milk, the outlets of which are arranged above a bowl of a mixer.

The first container comprises a worm gear that is actuated by a first reduction motor to perform the dosing of soluble coffee in the bowl of the mixer. The second container in turn comprises a worm gear that is actuated by a second reduction motor to perform the dosing of powdered milk in the bowl of the mixer; all of this by means of controlling the control circuit.

In order to obtain the selected product: coffee, milk or coffee with milk, the machine comprises a first peristaltic pump by means of which the control circuit applies hot water to the bowl, wherein it is mixed with the product that has been dosed, obtaining the selected product.

The invention provides for the incorporation of a second peristaltic pump, for the dispensing of hot water, such that infusions or similar products can be prepared.

Furthermore, the machine comprises a suction extractor by means of which the ventilation of the inside of the machine is performed.

### Description of the figures

To complete the description, and for the purpose of helping to make the characteristics of the invention more readily understandable, the present specification is accompanied by a set of figures constituting an integral part of the same, wherein by way of illustration and not limitation represent the following:

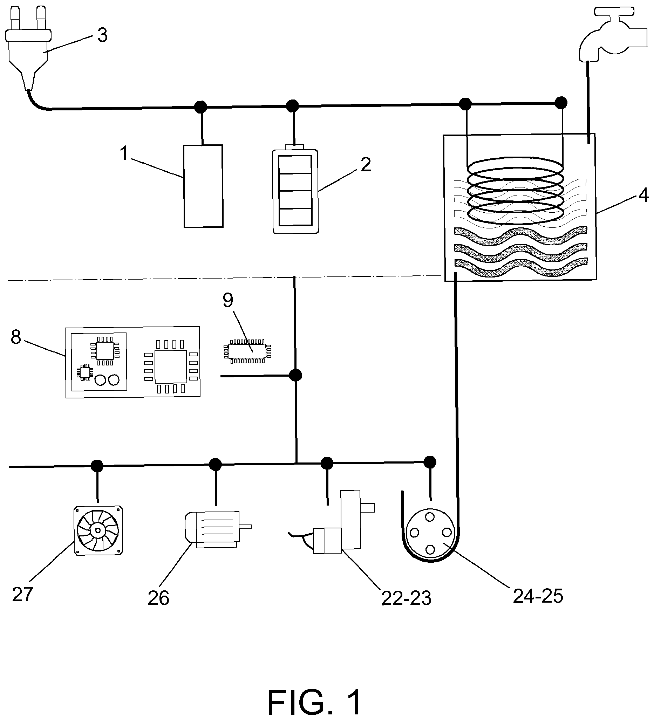

Figure 1 shows a schematic flowchart of an exemplary embodiment of the coffee machine of the invention.
Figure 2 shows a perspective view of the outer appearance of the machine.

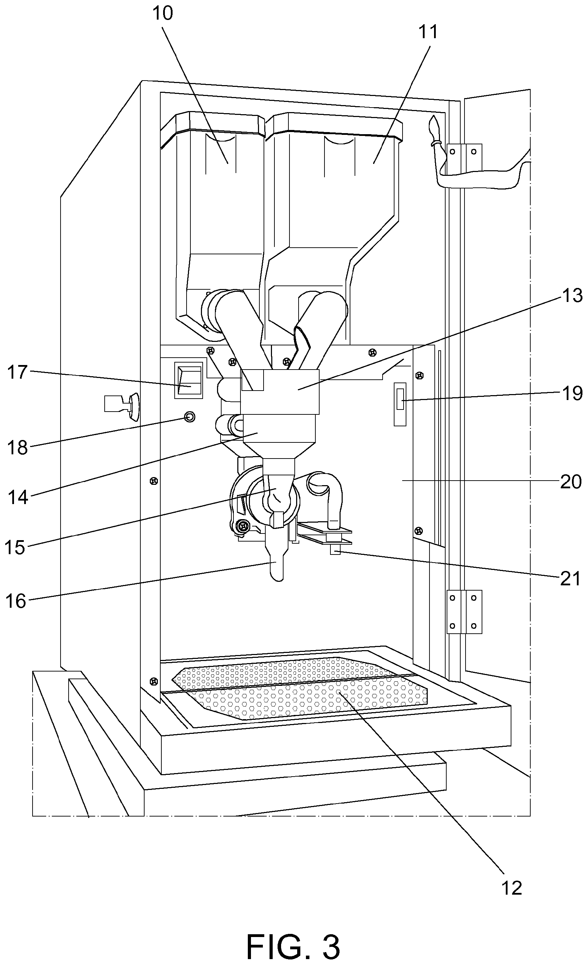

Figure 3 shows a perspective view of the inside of the front of the machine.

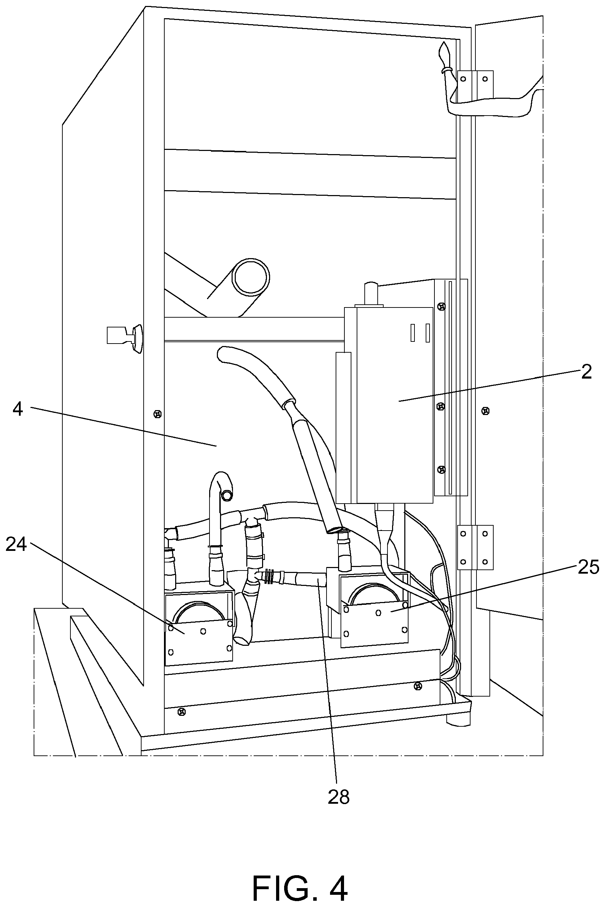

Figure 4 shows the inside of the machine, wherein the containers of coffee and milk or a portion of the mixer have not been shown, in order to show the rest of the inside of the machine.

### Preferred embodiment of the invention

The machine of the invention comprises a power source 1, which is responsible for charging an accumulator 2, by means of which the operating voltages of the electronic elements or components of the machine are provided. The accumulator 2 used in the exemplary embodiment is Li-ion 25.2 Vdc 7.8 Ah for the autonomous supply mode.

This configuration enables the machine to work with an autonomy of several days, such that it does not need to be continuously connected to an electrical grid, since once the accumulator 2 has been previously charged it can be disconnected from the electrical grid, which enables it to be portable. For this reason, the machine has reduced dimensions and is easy to handle. In the example, the dimensions are a width of 290 mm, a depth of 610 mm and a height of 600 mm.

With these dimensions it can be placed on a mobile cart, so that the responsible staff can move through the floors of the hospitals or residences, allowing the cup service to be provided directly to the client.

In order for the accumulator 2 to be initially charged, and in order to perform subsequent recharges; the machine comprises a connector 3 for connecting to the electrical grid, such that subsequent recharges can be performed when the charges run out and it can keep working in an autonomous and portable manner. The successive recharges are performed through the power source 1.

Furthermore, the coffee machine includes a heated water tank 4, which is equipped with a connection to a water network, like conventional machines, but with the difference that it is initially connected to the water network in order to fill the tank 4, and once the tank is full, the machine can be disconnected from the water network and transported to any place where the service thereof is required, without it needing to stay connected to the water network, or to the electrical grid, as described. The heated water tank 4 has sufficient capacity to be able to provide service for several days, just like the accumulator 2. For example, by means of a 14-litre tank, 90 cups are able to be supplied in an autonomous manner, without it needing to be connected to the water network. Obviously, the tank 4 also could be filled manually, by accessing the inside of the machine.

According to the foregoing, in order to start the service, the machine must be filled with water and the accumulator 2 must be charged, for which reason it is connected to the water network and the electrical grid. In about one hour the machine is ready, with the accumulator 2 being complete charged and with the tank 4 at the maximum capacity thereof (14 litres) and with the water heated to a temperature of 90° C. Thus, the machine can work autonomously for up to 4 days without being connected to the electrical grid and without being connected to the water network, enabling the portability thereof.

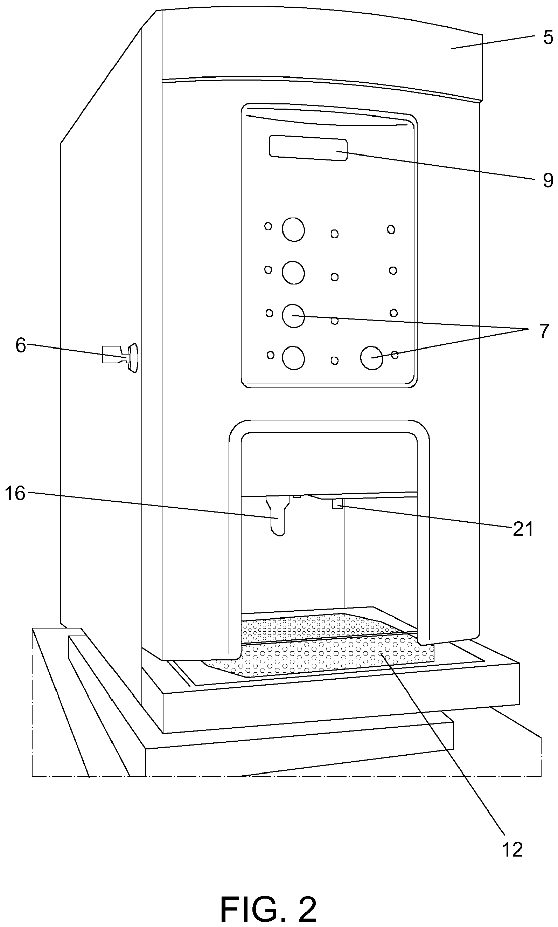

Figure 2 shows a perspective view of the outer appearance of the machine wherein a door 5 is seen for access to the inside thereof, with the corresponding lock 6, and wherein buttons 7 are included, which are connected to a control circuit 8 to select the product desired. This selection is performed in a manner equivalent to how it is performed in conventional machines, for which reason it is not described in detail. The control circuit 8, like in the state of the art, controls all the operations of the machine.

The door 5 also includes a display screen 9, by means of which the user is guided in the selection of the product and the state in which the machine is found until the product that has been selected is dispensed, which can be coffee, coffee with milk, etc.; all of this in a manner equivalent to how it is performed in the state of the art.

The lower portion of the machine comprises a waste tray 12, of the conventional type, wherein the waste from product that is left over or that has fallen on the tray 12 is gathered.

The inside of the machine comprises a first container 10 of soluble coffee and a second container 11 of powdered milk, which open into a suction bowl 13 of a mixer. Then the bowl comprises a mixer funnel 14, from which the product is applied to a mixer body 15 wherein hot water coming from the heated tank 4 is also applied, such that it beats and mixes the coffee and/or the powdered milk with the water, depending on the product selected, obtaining said selected product. The body 15 of the mixer is equipped with an outlet 16 through which the dosing of the selected product is performed, such that it falls towards the waste tray 12 wherein a cup has been previously placed, the product falling into the cup. The waste tray 12 gathers the product that could overflow from the cup or the product that could fall directly into the tray 12.

In order to perform the dosing of coffee and/or milk, the machine comprises a first reduction motor 22 for coffee and a second reduction motor 23 for milk, which respectively actuate worm gears included in the first container 10 and second container 11, such that the control circuit 8 controls the operations of the first and second reduction motors 10 and 11 in order to control the dosing of coffee and/or milk that must fall down to the bowl 13. In the body 15, the coffee and/or milk is mixed with hot water. The water is extracted from the heated water tank 4 by means of a first peristaltic pump 24.

Furthermore, the water tank 4 has a water outlet 21, which is arranged next to the outlet 16, for selecting, as product outlet, hot water, which falls into the cup, which enables the preparation of infusions or similar products. To do so, the machine has a second peristaltic pump 25, which opens into the outlet 21, by means of which the hot water is extracted from tank 4.

As such, the first and second peristaltic pumps 24 and 25 perform the conventional function of dispensing hot water that is extracted from the heated water tank 4, such that the first peristaltic pump 24 sends the water to the mixer to dissolve the product and the second peristaltic pump 25 sends it directly to the outlet 21, for the preparation of infusions and the like.

The rear portion of the door 5 comprises a keypad (not shown), connected to the control circuit 8, so that when the elements of the mixer, referring to the bowl 13, funnel 14, and body 15, are dirty, automatic washing of said elements can be performed, in a manner equivalent to that of the state of the art, for which reason it is not explained in greater detail.

Furthermore, it comprises an on/off switch 17 for turning the machine on or off, and the corresponding on/off indicator 18.

The inner front portion of the machine includes an indicator 19 for the charge level of the accumulator 2. The indicator 19 sticks out through a plate 20, behind which the accumulator 2 is found.

The tank 4 is arranged in the inner and rear portion of the machine, wherein it further comprises the control circuit 8, the power source 1, as well as a solenoid valve, a manometer, a maximum water level probe, a minimum water level probe, so that the control circuit 8 can control the filling of the tank 4 with water. The water inlet is provided in the outer, rear and upper portion of the machine. These elements are not described in greater detail due to being known.

Furthermore, it comprises a suction extractor 27 by means of which the ventilation of the inside of the machine is performed.

All the electronics have been designed to be able to work with the accumulator 2 (24V circuit) which provides electricity to the control circuit 8, display screen 9, as well as the extractor 27, to the first and second reduction motors 22 and 23 of the mixer assembly and to the first and second peristaltic pumps 24 and 25, which extract the hot water from the tank 4 for the dispensing of the product.

## Claims

1. A coffee machine, comprising electronic elements controlled by a control circuit (8) for dispensing a product, previously selected by a user, a heated water tank being one of the electronic elements; **characterised in that** it further comprises at least one power source (1) for charging an accumulator (2) for powering the electronic elements and the control circuit (8); wherein the control circuit is configured to control the recharging of the accumulator (2) through the power source (1) as well as filling the heated tank (4) with water, enabling the autonomous operation and portability of the machine, disconnected from an electrical grid and from a water network, the battery being charged and the heated water tank having been filled previously.

2. The machine, according to claim 1, **characterised in that** it comprises an indicator for the charge of the accumulator (2).

3. The machine, according to claim 1, **characterised in that** it comprises a solenoid valve and a manometer, connected to the heated water tank (4) by means of which the control circuit (8) controls the filling of the heated tank (4) with water.

4. The machine, according to claim 1, **characterised in that** it comprises a display screen (9), for guiding the user in the selection and dispensing of the product.

5. The machine, according to claim 1, **characterised in that** it comprises a first container (10) of soluble coffee and a second container (11) of powdered milk, the outlets of which open into a bowl (13) of a mixer.

6. The machine, according to claim 5, **characterised in that** it comprises a first reduction motor (22) for actuating a worm gear provided in the first container (10), for dosing soluble coffee into the bowl (13) of the mixer, and a second reduction motor (23) for actuating a worm gear provided in the second container (11), for dosing powdered milk into the bowl (13) of the mixer, by means of controlling the control circuit (8).

7. The machine, according to claim 6, **characterised in that** it comprises a first peristaltic pump (24) for applying hot water to the bowl (13) for the preparation of a product selected between coffee, milk and coffee with milk.

8. The machine, according to claim 1, **characterised in that** it comprises a second peristaltic pump (25), for dispensing hot water.

9. The machine, according to claim 7, **characterised in that** it comprises a suction extractor (27) for the inside of the machine.
